# EUROPÄISCHE PATENTSCHRIFT

(11) **EP 0 796 757 B1**
(45) Veröffentlichungstag und Bekanntmachung des Hinweises auf die Patenterteilung: **14.11.2001**
(21) Anmeldenummer: 97103748.6
(22) Anmeldetag: 06.03.1997
(51) Int. Cl.: B60L 3/00

(54) **Fehlertoleranter Antriebsstromrichter**
Convertisseur de puissance pour un entrainement tolérant les défauts
Fault tolerant motor drive power converter

(30) Priorität: 19.03.1996 DE 19610800
(43) Veröffentlichungstag der Anmeldung: 24.09.1997
(73) Patentinhaber: SIEMENS AKTIENGESELLSCHAFT, 80333 München (DE)
(72) Erfinder: Marquardt, Rainer, Dr., 91074 Herzogenaurach (DE)

(56) Entgegenhaltungen:
- EP-A- 0 646 487
- DE-A- 4 235 531
- US-A- 5 491 622
- PATENT ABSTRACTS OF JAPAN Bd. 015, Nr. 279 (M-1136) 16 Juli 1991 & JP 03 098 401 A (TOSHIBA CORP) 24 April 1991
- PATENT ABSTRACTS OF JAPAN Bd. 015, Nr. 244 (M-1127) 24 Juni 1991 & JP 03 078 401 A (TOSHIBA CORP) 03 April 1991
- MARQUARDT R: "HIGH POWER GTO CONVERTERS FOR THE NEW GERMAN HIGH SPEED TRAIN ICE" PROCEEDINGS OF THE EUROPEAN CONFERENCE ON POWER ELECTRONICS AND APPLICATIONS. (EPE), AACHEN, 9 - 12 OCTOBER, 1989, Bd. 2, 9.Oktober 1989, LEONHARD W;HOLTZ J; SKUDELNY H C, Seiten 583-587, XP000143451
- D. SCHMIDT: "Der InterCityExpress mit ABB-Drehstrom-Antriebstechnik" ABB TECHNIK, Nr. 10, 1991, Seiten 3-10, XP002045944

## Beschreibung

Die Erfindung bezieht sich auf einen Antriebsstromrichter mit einem Spannungszwischenkreis mit einer aus mehreren Kondensatoren bestehenden Kondensatorbatterie und wenigstens sieben gleichartigen Phasenmodulen, die jeweils abschaltbare Leistungshalbleiter aufweisen und die jeweils elektrisch leitend mit den Stromschienen des Spannungszwischenkreises verbunden sind.

Moderne Schienenfahrzeuge haben drehzahlveränderbare Antriebe mit umfangreicher Steuerungs- und Leistungselektronik an Bord. Die zahlreichen Vorteile dieser Technologie, wie z.B. die Einsatzmöglichkeit von fast wartungsfreien, sehr leistungsstarken Asynchronmotoren, verstärken auch weiterhin diesen Trend der Entwicklung. Die Wartungsfreiheit der Elektronik ist ein weiterer Vorteil. Die Tatsache, daß Elektronikausfälle zwar selten, aber statistisch auftreten und kaum durch regelmäßige, vorbeugende Wartung reduziert werden können, ist jedoch ein betrieblicher Nachteil im Schienenverkehr.

Für Elektroniksysteme höchster Zuverlässigkeit und Verfügbarkeit werden verschiedene Redundanztechniken bis hin zu Mehrfach-Parallelrechnern eingesetzt. Diese Lösungen können jedoch weitgehend nur bei der Steuerungselektronik verwendet werden. Einem Einsatz in der Leistungselektronik - Antriebsstromrichter - stehen der erhebliche Gewichts- und Volumenzuwachs und die hohen Mehrkosten entgegen, so daß diese Redundanztechniken fast ohne Anwendungen sind. Eine gewisse Entschärfung der Problematik entsteht, wenn eine Aufteilung der gesamten Antriebsleistung auf mehrere leistungsschwächere Systeme vorgenommen wird. Dies ist beispielsweise bei einem Schienenfahrzeug mit vier Achsen und vier Motoren möglich, wenn diese von vier einzelnen zugeordneten Antriebsstromrichter gespeist werden. Solch ein System fällt bei einem Elektronikausfall nur auf 75 % der Leistung und der Zugkraft zurück, was je nach Einsatzbedingungen des Fahrzeugs akzeptabel sein kann.

Auch dieser Weg ist jedoch nicht generell gangbar, weil die Ausfallhäufigkeit mit der Zahl der Antriebseinheiten ansteigt und das Gesamtvolumen und die Kosten ebenfalls durch die Aufteilung ungünstiger werden. Aus diesen Gründen wird auch bei Schienenfahrzeugen mit vier oder sechs Antriebsachsen und Motoren oft eine Aufteilung auf nur zwei Antriebsstromrichter gewählt, das heißt, einem Drehgestell ist ein Antriebsstromrichter zugeordnet.

Ein Antriebsstromrichter gemäß dem Oberbegriff des Anspruchs 1 ist beispielsweise aus der DE-Zeitschrift "ABB-Technik", Heft 10, 1991, Seiten 3 bis 10, bekannt. Das Bild 5 dieser Veröffentlichung zeigt ein Prinzipschaltbild eines Umrichters in GTO-Technik. Dieser dargestellte Antriebsstromrichter besteht aus zwei elektrisch parallel geschalteten Einspeise-Stromrichtern, einem Spannungszwischenkreis und einem lastseitigen Stromrichter, an deren Ausgängen zwei Antriebsmotoren angeschlossen sind. Die Einspeise-Stromrichter werden auch als Vierquadrantensteller bezeichnet und werden als Netzsteller eingesetzt, die sowohl für die fast ausschließliche Aufnahme von Wirkleistung aus dem Netz als auch für die Rückspeisung der aus der elektrischen Bremsung gewonnenen Energie als reine Wirkleistung an das Netz verantwortlich sind. Weiterhin ist der Vierquadrantensteller für die Aufrechterhaltung der konstanten Zwischenkreis-Gleichspannung, unabhängig von der Belastung, zuständig.

Der Gleichspannungs-Zwischenkreis weist eine aus mehreren Kondensatoren aufgebaute Kondensatorbatterie auf, die für ausreichende Glättung der Zwischenkreis-Gleichspannung sorgt. Elektrisch parallel zur Kondensatorbatterie ist meist noch ein Saugkreis geschaltet, der auf eine Resonanzfrequenz von 33 1/3 Hz (zweifache Netzfrequenz) abgestimmt ist. Der lastseitige Stromrichter formt die Zwischenkreis-Gleichspannung in ein dreiphasiges Spannungssystem um und speist die beiden Antriebsmotoren eines Drehgestells. Als lastseitiger Stromrichter ist ein Pulswechselrichter vorgesehen

Wie man dem Bild 5 dieser Veröffentlichung entnehmen kann, weist der Antriebsumrichter sieben gleichartige Phasenmodule auf. Ein Phasenmodul ist von einer unterbrochenen Linie umgeben. Ein derartiges Phasenmodul ist beispielsweise in dem Aufsatz "High power GTO converters for the new German high speed train ICE", abgedruckt im Konferenzband "EPE Aachen", 1989, Seiten 583 bis 587, ausführlich beschrieben und dargestellt.

Dieser Antriebsstromrichter pro Drehgestell arbeitet mit einer geringen Anzahl von Phasenmodulen, die bezüglich ihrer Strombelastung und der thermischen Belastung relativ gleichmäßig (günstig) ausgenutzt werden. Durch diese Ausgestaltung des Antriebsstromrichters konnte das Triebkopfgewicht bei gleicher Leistung erheblich reduziert werden, vereinfachte sich die Steuerung und die Anzahl der Leistungshalbleiter-Bauelemente verringerte sich drastisch.

Die möglichen Ausfälle eines Antriebsstromrichters werden wie folgt eingeteilt:
a) Erdschluß, d. h. Isolationsversagen gegen Erde (z. B. in den Motoren, in den Phasenmodulen oder in Kabeln, Stromschienen, Zwischenkreiskondensatoren)
b) Funktionsstörung eines Phasenmoduls (z. b. Leistungshalbleiter-Ausfall mit oder ohne Ausfall der dem Baustein zugeordneten Ansteuerelektronik und / oder ein Zwischenkreis-Kurzschluß im Phasenmodul)
c) Restliche Fehler (z. B. Lüfterausfall, Wasserpumpenausfall, Ausfälle von Sensoren, Ausfall von deren Hilfsstromversorgung)

Die unter c) genannten Ausfälle sind hier nicht Gegenstand der Betrachtung. Abhilfemaßnahmen durch Mehraufwand (Redundanz) sind bekannt und bei diesen Komponenten auch wirtschaftlich realisierbar.

Ohne Gegenmaßnahmen führt jeder dieser Ausfälle zum kompletten Ausfall des Antriebsstromrichters.

Aus der EP 0 646 487 A1 ist ein Verfahren und eine Vorrichtung zur Kompensation von Fehlfunktionen bzw. Ausfällen von Stromrichtern bekannt:. Der lastseitige Stromrichter besteht aus wenigstens zwei Hauptwechselrichtern, die elektrisch in Reihe am Gleichspannungs-Zwischenkreis geschaltet sind. Die Ausgänge jedes Wechselrichters sind mit einem Antriebsmotor verbunden. Außerdem sind noch zwei Hilfswechselrichter vorgesehen, die ebenfalls elektrisch in Reihe am Gleichspannungs-Zwischenkreis geschaltet sind. Ausgangsseitig sind diese Hilfswechselrichter jeweils mit einer Primärwicklung eines Transformators verbunden, an dessen Sekundärwicklung eine Hilfsversorgungsleitung, beispielsweise für Licht und Lüftung, angeschlossen ist. Die Haupt- und Hilfswechselrichter sind jeweils mittels eines Schalters vom Gleichspannungs-Zwischenkreis abschaltbar. Außerdem sind die Verbindungspunkte der in Reihe geschalteten Haupt- und Hilfswechselrichter miteinander verbunden. Wenn ein Hauptwechselrichter eine Fehlfunktion hat oder komplett ausfällt, so daß dieser mittels des Schalters vom Gleichspannungs-Zwischenkreis abgeschaltet werden muß, so wird diese Fehlfunktion bzw. dieser Ausfall mit Hilfe der Hilfswechselrichter kompensiert. Dadurch kann die Lokomotive mit verminderter Geschwindigkeit zum nächsten Bahnhof gelangen. Bei dieser Vorrichtung bilden die Hilfswechselrichter bzw. die Hauptwechselrichter bei einer Fehlfunktion bzw. einem Ausfall eines Hauptwechselrichters bzw. Hilfswechselrichters die Redundanz.

Aus der US-PS 5,491,622 ist ein lastseitiger dreiphasiger Stromrichter bekannt, der neben drei Phasenmodulen ein weiteres Phasenmodul aufweist. Diese vier Phasenmodule, die jeweils zwei abschaltbare Leistungshalbleiter aufweisen, sind elektrisch parallel zu einem Kondensator geschaltet. Die Ausgänge der drei Phasenmodule sind jeweils mit einem Phasenanschluß eines Drehstrommotors verbunden, wobei das weitere Phasenmodul ausgangsseitig mit dem Mittelpunkt, auch als neutraler Punkt bezeichnet, des Drehstrommotors verknüpft ist. Ein PWM-Modulator ist für die Steuerung der vier Phasenmodule verantwortlich. Im Normalfall werden nur die drei Phasenmodule angesteuert. Meldet eine Fehlermeßeinrichtung eines Phasenmoduls eine Fehlfunktion, so wird dieses fehlerhafte Phasenmodul nicht mehr angesteuert. Für dieses fehlerhafte Phasenmodul wird nun das weitere Phasenmodul angesteuert. Somit kann man mit diesem lastseitigen dreiphasigen Stromrichter bei Ausfall eines der drei Phasenmodule einen Drehstrommotor noch mit reduzierter Leistung weiterbetreiben.

Der Erfindung liegt nun die Aufgabe zugrunde, einen fehlertoleranten Antriebsumrichter anzugeben, der bei einem Fehler der Klasse a) oder b) in der Lage ist, weiterhin die volle Zugkraft bereitzustellen, ohne die Anzahl der Phasenmodule des Antriebsstromrichters zu erhöhen.

Diese Aufgabe wird erfindungsgemäß mit den kennzeichnenden Merkmalen des Anspruchs 1 gelöst.

Dadurch, daß jeweils zwei Phasenmodule und ein elektrisch parallel geschalteter Kondensator einen Sub-Stromrichter bilden, der von einer Stromschiene des Spannungszwischenkreises trennbar ist, wobei die andere Stromschiene mittels einer hohen Impedanz mit der Erdung des Antriebsstromrichters verbunden ist und daß die Ausgänge der Phasenmodule mittels einer Umschalt-Matrix mit Lastelementen verbindbar sind, wobei zur Betätigung der Umschalter dieser Umschalt-Matrix eine Steuereinrichtung vorgesehen ist, erhält man die Möglichkeit, daß bei einem Ausfall eines Sub-Stromrichters dieser durch einen anderen Sub-Stromrichter ersetzt werden kann, ohne daß sich die Zugkraft des Antriebsstromrichters vermindert. Damit diese Möglichkeit umgesetzt werden kann, ist ein Antriebsmotor mittels mehrerer Umschalter der Umschalt-Matrix mit den Ausgängen der Phasenmodule mehrerer Sub-Stromrichter verbindbar. Durch die Zuordnung der Lastelemente wie niederspannungsseitige Traktionswicklung, Antriebsmotor, Transformator für Hilfsbetriebe, ohmsche Widerstände für elektrische Bremse oder Überspannungsbedämpfung mittels der Umschalt-Matrix werden den Sub-Stromrichtern Funktionen übertragen. Die Umschalt-Matrix ist so gestaltet, daß jeder Sub-Stromrichter jeden Sub-Stromrichter ersetzen kann und daß auch jeder Sub-Stromrichter jede Funktion (Einspeise-Stromrichter, lastseitiger Stromrichter) des Antriebsstromrichters erfüllen kann. Da bei Ausfall eines Sub-Stromrichters wegen möglicher Brandgefahr dieser weder mit der Zwischenkreis-Gleichspanung noch mit einer Isolierspannung gegen Erde beansprucht werden soll, muß ein defekter Sub-Stromrichter vom Spannungszwischenkreis abtrennbar sein.

Es besteht die Möglichkeit, die Anzahl der Phasenmodule pro Sub-Stromrichter verschieden von zwei zu wählen. Beispielsweise können drei Phasenmodule mit einem Kondensator einen Sub-Stromrichter bilden. Derartige Sub-Stromrichter wären bei einem Industrie-Stromrichter an einem dreiphasigen Netz denkbar. Bei einem derartigen Stromrichter müßten wenigstens neun Phasenmodule für drei Sub-Stromrichter vorgesehen werden.

Bei einer ersten Ausführungsform wird zur Abtrennung der Sub-Stromrichter jeweils ein Schalter, der jeweils die Verbindung zur positiven oder negativen Stromschiene des Spannungszwischenkreises unterbricht.

Bei einer zweiten Ausführungsform wird zur Abtrennung der Sub-Stromrichter jeweils eine Sicherung verwendet, die entweder jeweils die Verbindung zur positiven oder negativen Stromschiene des Spannungszwischenkreises unterbricht.

Damit beim Ausfall eines Sub-Stromrichters eine neue Antriebsstromrichterschaltung aufgebaut werden kann, müssen wenigstens ein Schalter und mehrere Umschalter der Umschalt-Matrix betätigt werden. Dies wird von einer Steuereinrichtung übernommen, der bereits vorhandene Istwerte des Antriebsstromrichters zugeführt werden.

Damit der niederinduktive Aufbau des Spannungszwischenkreises nicht allzusehr gestört wird, ist es vorteilhaft, daß die Anzahl der Trennstellen der Sub-Stromrichter des Antriebsumrichters zu einer Stromschiene des Spannungszwischenkreises so klein gehalten werden kann, wobei die Anbringung von Trennstellen selbst niederinduktiv ausgeführt werden soll.

Die Umschalter der Umschalt-Matrix sind von ihrer Beanspruchung und den zulässigen Induktivitäten unkritisch. Sie können beispielsweise gemeinsam auf einer Schaltwalze räumlich zwanglos angeordnet werden.

Durch die Verwendung von Sicherungen zur Abtrennung der Sub-Stromrichter von einer Stromschiene des Spannungszwischenkreises werden das Volumen und die Kosten des Antriebsstromrichters nochmals deutlich reduziert. Die Sicherungen sind bezüglich des Nennstroms überdimensioniert, wobei zur Auslegung das Schmelzintegral bei Stoßentladung des Zwischenkreises verwendet wird. Dadurch erhält man eine gute Selektivität zu den anderen Sicherungen im Fehlerfall.

Bei einer vorteilhaften Ausführungsform der zweiten Ausführungsform des Antriebsstromrichters ist ein weiterer Kondensator zwischen den Stromschienen des Spannungszwischenkreises geschaltet. Durch diesen zusätzlichen Kondensator kann die Selektivität weiter verbessert werden.

Durch die erfindungsgemäße Ausgestaltung des Antriebsstromrichters erhält man einen fehlertoleranten Antriebsstromrichter, bei dem trotz Ausfalls eines Sub-Stromrichters die volle Zugkraft erhalten bleibt. Außerdem bleibt auch die reduzierte Leistung (bei hohen Geschwindigkeiten) mit dann 75 % vom Nennwert (bei zwei Antriebseinheiten pro Fahrung) so hoch, daß trotz eines schwerwiegenden Ausfalls im allgemeinen ein fahrplanmäßiger Betrieb gewährleistet werden kann.

Die Fehlerbeseitigung kann somit auf einen nächstmöglichen Wartungstermin verschoben werden, wobei mittels eines Fehlerprotokolls bzw. einer Leuchtanzeige der defekte Sub-Stromrichter sofort lokalisiert werden kann.

Zur weiteren Erläuterung der Erfindung wird auf die Zeichnung Bezug genommen, in der zwei Ausführungsformen des erfindungsgemäßen Antriebsstromrichters schematisch veranschaulicht sind.
- Figur 1: zeigt ein Prinzipschaltbild einer ersten Ausführungs form eines erfindungsgemäßen Antriebsstromrichter, wobei die
- Figur 2: ein Prinzipschaltbild einer zweiten Ausführungsform eines erfindungsgemäßen Antriebsstromrichters dar stellt.

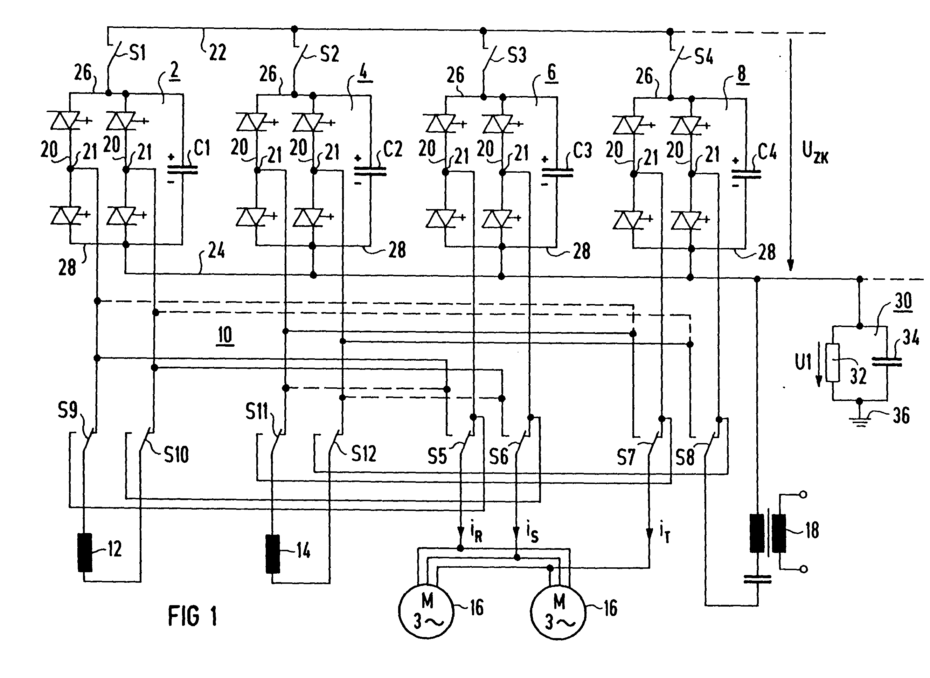

Die Figur 1 zeigt ein Prinzipschaltbild einer ersten Ausführungsform eines erfindungsgemäßen Antriebsstromrichters. Dieser Antriebsstromrichter weist vier Sub-Stromrichter 2, 4, 6 und 8, eine Umschalt-Matrix 10 und mehrere Lastelemente 12, 14, 16 und 18 auf. Die vier Sub-Stromrichter 2 bis 8 weisen jeweils gleichartige Phasenmodule 20 auf, die jeweils abschaltbare Thyristoren als Leistungshalbleiter verwenden. Derartige Phasenmodule 20 werden seit Jahren bei Traktionsantrieben verwendet und sind in dem Eingang erwähnten EPE-Aufsatz ausführlich beschrieben. Die Ausgänge 21 der Phasenmodule 20 der Sub-Stromrichter 2 und 4 sind mittels der Umschalt-Matrix 10 jeweils mit einer niederspannungsseitigen Traktionswicklung 12 und 14 eines nicht näher dargestellten Traktionstransformators verbindbar. Dazu sind Umschalter S9, S10, S11 und S12 vorgesehen. Diese Sub-Stromrichter 2 und 4 bilden somit jeweils einen Einspeise-Stromrichter, der auch als Vierquadrantensteller (4q-S) bezeichnet wird.

Der Spannungszwischenkreis weist eine positive und eine negative Stromschiene 22 und 24 und eine aus mehreren Kondensatoren C1, ..., C4 bestehende Kondensatorbatterie auf. Die Kondensatoren C1, ..., C4 sind auf die Sub-Stromrichter 2, 4, 6 und 8 aufgeteilt.

Die Sub-Stromrichter 6 und 8 bilden einen lastseitigen Stromrichter und einen Hilfsbetriebe-Wechselrichter. Statt der Funktion Hilfsbetriebe-Wechselrichter ist u.a. auch die Funktion Widerstandsbremse möglich. Die Kondensatoren C1, ..., C4 sind jeweils elektrisch parallel zu den Gleichstrom-Anschlüssen 26 und 28 der Sub-Stromrichtern 2 bis 8 geschaltet. Die Ausgänge 21 dieser Sub-Stromrichter 6 und 8 sind jeweils mit einem.Anschluß eines Umschalters S5, S6, S7 und S8 der Umschalt-Matrix 10 verbunden. Ausgangsseitig ist jeder Umschalter S5, S6, S7 mit einem Anschluß des Antriebsmotors 16 und der Umschalter S8 mit einem Transformator für Hilfsbetriebe verknüpft. Der andere Anschluß jedes Umschalters S5, S6, S7 und S8 ist mit einem Ausgang 21 der Sub-Stromrichter 2 und 4 elektrisch leitend verbunden. Die dargestellte Verschaltung der Umschalter S5 bis S12 dieser Umschalt-Matrix 10 ist ein Ausschnitt aus den möglichen Verknüpfungen der Umschalter S5 bis S12 dieser Umschalt-Matrix 10. Mit dieser Umschalt-Matrix 10 soll es möglich sein, daß jeder Sub-Stromrichter 2 bis 8 mit jedem Lastelement 12 bis 18 verbindbar ist und daß jeder Sub-Stromrichter 2 bis 8 jeden Sub-Stromrichter 2 bis 8 ersetzen kann. Erst durch die Verknüpfung mittels der Umschalt-Matrix 10 erhalten die Sub-Stromrichter 2 bis 8 eine Funktion wie Einspeise-Stromrichter Wechselrichter oder Hilfsbetriebeumrichter.

Die Gleichstrom-Anschlüsse 28 der Sub-Stromrichter 2 bis 8 sind direkt mit der negativen Stromschiene 24 des Spannungszwischenkreises des Antriebsstromrichters verknüpft, wogegen die Gleichstrom-Anschlüsse 26 der Sub-Stromrichter 2 bis 8 jeweils mittels eines Schalter S1, S2, S3 und S4 mit der positiven Stromschiene 22 des Spannungszwischenkreises des Antriebsstromrichters verbunden sind. In dieser dargestellten Ausführungsform ist die negative Stromschiene 24 mittels einer hohen Impedanz 30, bestehend aus einer Parallelschaltung eines Widerstandes 32 und eines Kondensators 34, mit der Erdung 36 des Antriebsstromrichters verknüpft. Die Schalter S1, ...,S4 können auch die Gleichstromanschlüsse 28 der Sub-Stromrichter 2, 4, 6 und 8 mit der negativen Stromschiene 24 des Spannungszwischenkreises verbinden, wogegen dann die Gleichstromanschlüsse 26 der Stromrichter 2, 4, 6 und 8 mit der positiven Stromschiene 22 verbunden sind. In diesem Fall ist die hohe Impedanz 30 mit der positiven Stromschiene 22 verknüpft.

Zur Betätigung der Schalter S1, ... S4 und der Umschalter S5 bis S12 der Umschalt-Matrix 10 ist eine Steuereinrichtung vorgesehen, der Istwerte i_{R,S,T,} U_{ZK} und U1 des Antriebsstromrichters zugeführt werden. Diese Steuereinrichtung ist aus Übersichtlichkeitsgründen nicht näher dargestellt. Diese Istwerte sind die Motorströme i_{R,S,T} und die Zwischenkreis-Gleichspannung U_{ZK}, die zu Regelungszwecken von der Antriebssteuerung ohnehin erfaßt werden. Der Istwert U1 wird an der hohen Impedanz 30 erfaßt und gibt an, ob ein Erdschluß (U1≠0)vorliegt. Diese Steuereinrichtung ermittelt in Abhängigkeit der zugeführten Istwerte i_{R,S,T,} U_{ZK} und U1, welcher Schalter S1, ..., S4 und welche Umschalter S5, ..., S12 betätigt werden müssen. In Abhängigkeit dieser ermittelten Betätigungssignale werden ebenfalls von der Steuereinrichtung Umschaltsignale generiert, die in der Antriebssteuerung die Steuersignale für die Sub-Stromrichter 6 und 8, die die Funktion eines lastseitigen Stromrichters verwirklichen, und die Sub-Stromrichter 2 und 4 entsprechend der neuen Stromrichterschaltung umschaltet.

Die Funktionsweise dieses Antriebsstromrichters wird im folgenden erläutert:

Im Normalbetrieb sind die Schalter S1, ..., S4 geschlossen und die Umschalter S5 bis S12 der Umschalt-Matrix 10 sind in der eingezeichneten Stellung. Die Spannung U1 an der hohen Impedanz 30 ist Null.

Sobald die Spannung U1 ungleich Null wird, liegt ein Erschluß vor (Fehlerklasse a)). Das heißt, in den Antriebsmotoren 16, in den Phasenmodulen 20 oder in Kabeln, Stromschienen 22, 24, Kondensatoren C1, ..., C4 der Kondensatorbatterie des Spannungszwischenkreises tritt ein Isolationsversagen gegen Erde auf. die Suche und Fehlerbeseitigung kann jedoch auf den nächsten Wartungstermin verschoben werden.

Beim Auftritt eines Fehlers der Fehlerklasse b), d. h., Funktionsstörung eines Phasenmoduls 20 infolge eines Leistungshalbleiter-Ausfalls mit oder ohne Ausfall der dem Modul 20 zugeordneten Ansteuerelektronik, der durch seine störenden Auswirkungen wie Zugkraftverlust und erhebliche Abweichung der Zwischenkreis-Gleichspanung oder der Motorströme i_{R,S,T,} auch als Lastströme bezeichnet, von den Sollwerten erkannt wird, muß einer der Schalter S1, ..., S4 geöffnet werden. Außerdem muß einer der Umchalter S5 bis S12 umgelegt werden.
Dies sollte vorteilhafterweise erst nach Entregung der Motoren 16 und Entladung der Kondensatoren C1, .., C4 erfolgen, damit die Schalter S1, ..., S4 lastlos schalten können. Welcher der Schalter S1, ..., S4 geöffnet werden muß, läßt sich aus den Motorströmen i_{R,S,T} erkennen.

Die nachfolgende Tabelle 1 zeigt an, welcher Schalter S1, ..., S4 bei welchem Ausfall der Sub-Stromrichter 2, 4, 6 und 8 geöffnet werden muß. Außerdem wird zu jedem Störfall die Zugkraft und die Leistung des Antriebsumrichters in Prozent angegeben.

| Ausfall Stromrichter | Schalter öffnen | Umschalter betätigen | Zugkraft | Leistung |
|---|---|---|---|---|
| Sub-Stromrichter 2 | S1 | S9, S10 | 100 % | 50 % |
| Sub-Stromrichter 4 | S2 | S11, S12 | 100 % | 50 % |
| Sub-Stromrichter 6 | S3 | S5, S6, S9, S10 | 100 % | 50 % |
| Sub-Stromrichter 8 | S4 | S7, S8 S11, S12 | 100 % | 50 % |

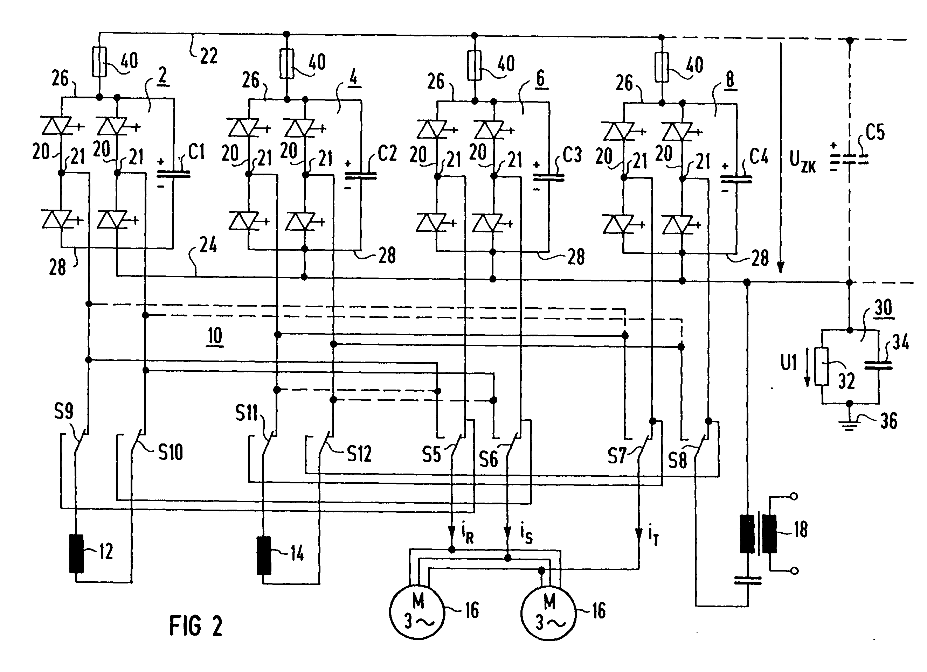

Wie dieser Tabelle 1 zu entnehmen ist, muß beim Ausfall des Sub-Stromrichters 6 der Schalter S3 geöffnet und die Schalter S5 und S6 umgelegt werden. Damit die niederspannungsseitige Traktionswicklung 12 von den Ausgängen 21 des Sub-Stromrichters 2 getrennt ist, muß wenigstens einer der Umschalter S9 und S10 in eine Mittelstellung (neutrale Stellung) gebracht werden. Der Übersichtlichkeit halber sind derartige Umschalter mit Mittelstellung in der Umschalt-Matrix der Figuren 1 und 2 nicht dargestellt worden.

Dadurch wird der Sub-Stromrichter 6 durch den Sub-Stromrichter 2 ersetzt. Dadurch erhält man für den Antriebsstromrichter eine Stromrichterschaltung, die aus Sub-Stromrichter 2, 4 und 8 besteht, wobei die Funktion des Sub-Stromrichters 6 nun vom Sub-Stromrichter 2 übernommen wird. Das heißt, die Steuersignale, die bisher zum Sub-Stromrichter 6 geleitet wurden, müssen nun die Steuersignale für den Sub-Stromrichter 2 ersetzen. Diese Umleitung von Steuersignalen erfolgt mittels Umschaltsignalen, die ebenfalls von der nicht näher dargestellten Steuereinrichtung generiert werden.

Ferner ist dieser Tabelle 1 zu entnehmen, daß bei dieser neuen Stromrichter-Konstellation die volle Zugkraft bereitgestellt wird. Die Fehlerbeseitigung kann vorteilhafterweise auf den nächstmöglichen Wartungstermin verschoben werden. Bei Fahrzeugen mit mindestens zwei Antriebsstromrichtern bleibt auch die reduzierte Leistung (bei hohen Geschwindigkeiten) mit dann 75 % vom Normalwert so hoch daß im allgemeinen ein fahrplanmäßiger Verkehr gewährleistet ist.

Der Aufwand zur Realisierung des dargestellten Antriebssystems ist äußerst gering und liegt vorwiegend in den Schalter S1, ... S4, die eine der Stromschienen 22, 24, des Spannungszwischenkreises mit einem Gleichspannungs-Anschluß 26 bzw. 28 der Sub-Stromrichter 3, 4, 6 und 8 verbindbar machen. Diese Schalter S1, ..., S4 müssen im Fehlerfall den hohen Stoßentladungsströmen aus den Zwischenkreiskondensatoren C1, ..., C4 standhalten. Die Umschalter S5 bis S12 sind von ihrer Beanspruchung und den zulässigen Induktivitäten her vergleichsweise völlig unkritisch. Sie können gemeinsam auf Schaltwalzen räumlich zwanglos in einer Umschalt-Matrix 10 angeordnet werden.

Bei dieser vorteilhaften Ausführungsform der ersten Ausführung des Antriebsstromrichters wird der niederinduktive Aufbau des Zwischenkreises, der grundsätzlich bei Stromrichtern mit abschaltbaren Leistungshalbleiterschaltern angestrebt wird, weniger gestört. Das heißt, die Anzahl der Schalter wird so klein wie möglich gehalten, daß ein günstiger niederinduktiver Aufbau des Zwischenkreises weiterhin möglich ist.

Diese erste Ausführungsform des Antriebsumrichters ermöglicht ein besonders für die Anforderungen des Schienenverkehrs optimiertes, fehlertolerantes Antriebssystem, bei dem trotz Auftreten eines schwerwiegenden Ausfalls die volle Zugkraft erhalten bleibt. Dadurch kann ein fahrplanmäßiger Verkehr aufrechterhalen werden.

Die Figur 2 zeigt ein Prinzipschaltbild einer zweiten Ausführungsform des erfindungsgemäßen Antriebsstromrichters. Bei dieser zweiten Ausführungsform des erfindungsgemäßen Antriebsstromrichters sind die Schalter S1, ..., S4 durch Sicherung 40 ersetzt worden. Durch die Verwendung von Sicherung 40 anstelle der Schalter S1, ... S4 können Volumen und Kosten nochmals deutlich reduziert werden. Das Verhalten bei Fehlern der Fehlerklasse a) bleibt wie beschrieben. Bei einem Ausfall nach Fehlerklasse b) löst die gewünschte Sicherung 40 infolge des Stoßstromes aus der Entladung der Zwischenkreiskondensatoren C1, ... C4 aus. Diese Sicherungen 40 sind robust überdimensioniert, da sie nicht wie in anderen Anwendungen knapp über dem Nennstrom ausgelegt werden müssen. Es gilt vielmehr das hohe Schmelzintegral bei Stoßentladung des Zwischenkreises. Die Selektivität zu den anderen Sicherungen im Fehlerfall ist bei n≥4 Sub-Stromrichtern 2, 4, 6 und 8 gut. Sie kann durch einen gemeinsamen Kondensator C5, der in dieser Figur gestrichelt dargestellt ist, weiter verbessert werden. Dieser gemeinsame Kondensator C5 ist elektrisch parallel zu den Stromschienen 22 und 24 des Spannungszwischenkreises geschaltet.

Falls im Fehlerfall ein Stoßstrom nicht ausreicht, um eine Sicherung 40 ansprechen zu lassen, kann die gewünschte Sicherung 40 durch Einschalten (gleichzeitig) beider steuerbarer Halbleiter im betroffenen Phasenmodul 20 von der Antriebssteuerung ausgelöst werden. Ist auch dies (z. B. durch Fehler in der Ansteuerleketronik) nicht erforderlich, so kann diese Aufgabe vom zweiten Phasenmodul 20 des betroffenen Sub-Stromrichters 2, 4, 6 oder 8 übernommen werden.

Sollte trotz der robusten Überdimensionierung eine Fehlauslösung einer Sicherung 40 im Normalbetrieb auftreten, wird diese wie jeder andere Fehler der Fehlerklasse b) durch die Fehlertoleranz des Systems abgedeckt.

## Patentansprüche

1. Antriebsstromrichter mit einem Spannungszwischenkreis mit einer aus mehreren Kondensatoren (C1, ..., C4) bestehenden Kondensatorbatterie und wenigstens sieben gleichartigen Phasenmodulen (20), die jeweils abschaltbare Leistungshalbleiter aufweisen und die jeweils elektrisch leitend mit den Stromschienen (22, 24) des Spannungszwischenkreises verbunden sind, **dadurch gekennzeichnet, daß** jeweils zwei Phasenmodule (20) und ein elektrisch parallel geschalteter Kondensator (C1, ..., C4) einen Sub-Stromrichter (2, 4, 6, 8) bilden, der von einer Stromschiene (22, 24) des Spannungszwischenkreises trennbar ist, wobei die andere Stromschiene (24, 22) mittels einer hohen Impedanz (30) mit der Erdung (36) des Antriebsstromrichters verbunden ist, und daß jeder Ausgang (21) der Phasenmodule (20) mittels einer mehrere Umschalter (S5, ..., S12) aufweisenden Umschalt-Matrix (10) mit einem Lastelement (12, 14, 16, 18) verbindbar ist, wobei zur Betätigung der Umschalter (S5, ..., S12) dieser Umschalt-Matrix (10) eine Steuereinrichtung vorgesehen ist.

2. Antriebsstromrichter nach Anspruch 1, wobei jeweils drei Phasenmodule (20) und ein elektrisch parallel geschalteter Kondensator einen Sub-Stromrichter bilden.

3. Antriebsstromrichter nach Anspruch 1, wobei zur Trennung der Sub-Stromrichter (22) jeweils ein Schalter (S1, ..., S4) vorgesehen ist.

4. Antriebsstromrichter nach Anspruch 1, wobei zur Trennung der Sub-Stromrichter (22) jeweils eine Sicherung (40) vorgesehen ist.

5. Antriebsstromrichter nach Anspruch 1 und 4, wobei ein weiterer Kondensator (C5) zwischen den Stromschienen (22, 24) des Spannungszwischenkreises geschaltet ist.

6. Antriebsstromrichter nach Anspruch 1, wobei jedem Sub-Stromrichter (22) Meßwert-Erfassungseinrichtungen für Strom und Spannung zugeordnet sind.

7. Antriebsstromrichter nach Anspruch 1, wobei der Steuereinrichtung Istwerte (i_{R,S,T,} U_{ZK}) des Antriebsstromrichters zugeführt werden.

8. Antriebsstromrichter nach Anspruch 1, wobei als Lastelemente (12, 14, 16, 18) niederspannungsseitige Traktionswicklungen, Antriebsmotoren und ein Transformator für Hilfsbetriebe vorgesehen sind.

9. Antriebsstromrichter nach Anspruch 1, wobei als Lastelemente ein ohmscher Widerstand vorgesehen ist.

10. Antriebsstromrichter nach Anspruch 1, wobei als Lastelemente eine Überspannungsbedämpfung vorgesehen ist.

## Claims

1. Drive converter with a voltage-source DC link with a capacitor battery comprising several capacitors (C1, ..., C4) and at least seven phase modules (20) of like kind, which each have disconnectable power semiconductors and which are each conductively connected to the current buses (22, 24) of the voltage-source DC link, **characterised in that** respectively two phase modules (20) and one capacitor (C1, ..., C4) connected electrically parallel form one subconverter (2, 4, 6, 8) that is separable from one current bus (22, 24) of the voltage-source DC link, with the other current bus (24, 22) being connected via a high impedance (30) to the earth (36) of the drive converter, and that each output (21) of the phase module (20) can be connected via a switch matrix (10) having several transfer switches (S5, ..., S12) to a load element (12, 14, 16, 18), with a control device being provided for activation of the transfer switch (S5, ..., S12) of this switch matrix (10).

2. Drive converter according to Claim 1, with three phase modules (20) and a capacitor connected electrically parallel respectively forming a sub-converter.

3. Driver converter according to Claim 1, with in each case a switch (S1, ..., S4) being provided for separation of the sub-converters (22).

4. Drive converter according to Claim 1, with in each case a fuse (40) being provided for separation of the sub-converters (22).

5. Drive converter according to Claims 1 and 4, with an additional capacitor (C5) being switched between the current buses (22, 24) of the voltage-source DC link.

6. Drive converter according to Claim 1, with measured value recording devices for current and voltage being assigned to each sub-converter (22).

7. Drive converter according to Claim 1, with actual values (i_{R.S.T.}, U_{ZK}) of the drive converter being supplied to the control device.

8. Drive converter according to Claim 1, with low-voltage traction windings, drive motors, and a transformer for auxiliary operation being provided as load elements (12, 14, 16, 18).

9. Drive converter according to Claim 1, with an ohmic resistor being provided as load elements.

10. Drive converter according to Claim 1, with an overvoltage damping being provided as load elements.

## Revendications

1. Convertisseur de puissance d'entraînement ayant un circuit intermédiaire de tension comportant une batterie de condensateurs constituée de plusieurs condensateurs (C1, ..., C4) et au moins sept modules de phase (20) de même type qui présentent chacun des semi-conducteurs de puissance déconnectables et sont en liaison électriquement conductrice avec les barres conductrices (22, 24) du circuit intermédiaire de tension, **caractérisé en ce que** deux modules de phase (20) et un condensateur (C1, ..., C4) branché en parallèle forment respectivement un sous-convertisseur de puissance (2, 4, 6, 8) qui peut être séparé d'une barre conductrice (22, 24) du circuit intermédiaire de tension, l'autre barre conductrice (24, 22) étant reliée au moyen d'une grande impédance (30) à la prise de terre (36) du convertisseur de puissance d'entraînement, et que chaque sortie (21) des modules de phase (20) peut être reliée au moyen d'une matrice de commutation (10) présentant plusieurs inverseurs (S5, ..., S12), à un élément de charge (12, 14, 16, 18), un dispositif de commande étant prévu pour actionner les inverseurs (S5, ..., S12) de cette matrice de commutation (10).

2. Convertisseur de puissance d'entraînement selon la revendication 1, trois modules de phase (20) et un condensateur branché en parallèle formant respectivement un sous-convertisseur de puissance.

3. Convertisseur de puissance d'entraînement selon la revendication 1, un commutateur (S1, ..., S4) étant prévu pour séparer les sous-convertisseurs de puissance.

4. Convertisseur de puissance d'entraînement selon la revendication 1, un fusible de sécurité (40) étant prévu pour séparer les sous-convertisseurs de puissance.

5. Convertisseur de puissance d'entraînement selon les revendications 1 et 4, un condensateur (C5) supplémentaire étant monté entre les barres conductrices (22, 24) du circuit intermédiaire de tension.

6. Convertisseur de puissance d'entraînement selon la revendication 1, des dispositifs de détection de valeurs de mesure pour le courant et la tension étant associés à chaque sous-convertisseur de puissance.

7. Convertisseur de puissance d'entraînement selon la revendication 1, des valeurs instantanées (i_{R, S, T}, U_{ZK}) du convertisseur de puissance d'entraînement étant transmises au dispositif de commande.

8. Convertisseur de puissance d'entraînement selon la revendication 1, des enroulements de traction côté basse tension, des moteurs d'entraînement et un transformateur auxiliaire étant prévus comme éléments de charge (12, 14, 16, 18).

9. Convertisseur de puissance d'entraînement selon la revendication 1, une résistance ohmique étant prévue comme élément de charge.

10. Convertisseur de puissance d'entraînement selon la revendication 1, un dispositif d'amortissement des surtensions étant prévu comme élément de charge.
